# EUROPEAN PATENT SPECIFICATION

(11) **EP 0 662 070 B1**
(45) Date of publication and mention of the grant of the patent: **29.12.1997**
(21) Application number: 93922262.6
(22) Date of filing: 21.09.1993
(51) Int. Cl.: C01B 3/00, B01J 20/20, C01B 31/08

(54) **STORAGE OF HYDROGEN**
SPEICHERUNG VON WASSERSTOFF
STOCKAGE D'HYDROGENE

(30) Priority: 28.09.1992 US 952226
(43) Date of publication of application: 12.07.1995
(73) Proprietor: AlliedSignal Inc., Morristown, New Jersey 07962-2245 (US)
(72) Inventor: CHANG, Chin-Hsiung, Palatine, IL 60067 (US); SEMINARA, Gary, Joseph, Chicago, IL 60638 (US)
(74) Representative: Hucker, Charlotte Jane
(86) International application number: US9308892
(87) International publication number: WO9407794

(56) References cited:
- WO-A-89/05691
- WO-A-90/08751
- INTERNATIONAL JOURNAL OF HYDROGEN ENERGY. vol. 14, no. 7 , 1989 , OXFORD GB pages 437 - 447 K.A.G.AMANKWAH ET AL. 'Hydrogen storage on superactivated carbon at refrigeration temperatures' cited in the application
- INTERNATIONAL JOURNAL OF HYDROGEN ENERGY. vol. 5 , 1980 , OXFORD GB pages 539 - 554 C. CARPETIS, W. PESCHKA 'A study on hydrogen storage by use of cryoadsorbents' cited in the application
- INTERNATIONAL JOURNAL OF HYDROGEN ENERGY. vol. 12, no. 10 , 1987 , OXFORD GB pages 693 - 700 J.S. NOH ET AL. 'Hydrogen storage systems using activated carbon'

## Description

### BACKGROUND OF THE INVENTION

The invention relates to a method of storing hydrogen. More particularly, the invention relates to storage of hydrogen using a solid adsorbent, in particular, a carbon molecular sieve.

U.S. Patent Nos. 4,540,678; 4,627,857; and 4,629,476 issued to R.F. Sutt, Jr. describe the preparation of carbon molecular sieves from carbon sources such as coal or coconut char by carbonizing the feed material in a substantially oxygen-free environment.

U.S. Patent No. 4,046,709 issued to N. Yuki and 4,420,415 issued to N. Yuki et al. describe the production of carbon molecular sieves from a vinylidene chloride copolymer (Saran). The copolymer is carbonized for the removal of its chlorine and hydrogen components which produces a soft porous carbon which is pulverized. Agents such as coal tar pitch and cellulose are added to the pulverized product, which then is formed into the desired shape before being subjected to a high temperature carbonizing treatment.

Chang et al. in U.S. Pat. No. 4,820,681 have disclosed an improved carbon molecular sieve which has a high capacity for carbon dioxide and may be characterized as hydrophobic, requires no binders, and may be carbonized in a single step.

Hydrogen has the highest energy density per unit weight of any fuel, but as it has a low molecular weight it occupies a large volume per unit weight compared to other fuels. Thus, reducing the volume of hydrogen is necessary for most practical applications of hydrogen as a fuel. Methods for doing this could include (1) storage at high pressure, (2) liquefaction and storage at low temperatures, (3) converting hydrogen to a metal hydride, and (4) adsorption on solids. Of these methods the last is of particular interest since compact storage of hydrogen at moderate pressures may be achieved, while avoiding the cryogenic temperatures needed for liquid hydrogen.

C. Carpetis and W. Peschka, Int. J. Hydrogen Energy, Vol. 5, p. 539-554, Pergamon Press Ltd. 1980, discuss the storage of hydrogen on adsorbents and conclude that carbons provided the best performance. Their experiments were carried out at a temperature of 65-150°K (-208° to -123° C) and lower temperatures were favored. K.A.G. Amankwah et al., Int. J. Hydrogen Energy, Vol. 14, No. 7, p. 437-447, Pergamon Press Ltd., 1989, reported storage of hydrogen on a super-activated carbon at temperatures of 150°-165°K (-123° to -108°C). They recommended that the maximum pressure should be about 55 atm (5574 kPa).

Conventional activated carbons, such as Calgon PCB, Degussa F12, F12/350 and Anderson AX-21, have been found to have reasonable capacity for hydrogen, but still higher capacity for hydrogen is sought. Inorganic zeolites have also been tried, but found to have relatively low capacity for hydrogen. Metal oxides, such as nickel oxide-silicate, silica gel, and Kiesel gel have also been considered, but their capacities have been found to be lower than activated carbons.

In U.S. Pat. No. 3,300,992, Hager et al. disclose the use of activated carbon impregnated with chemisorbers for hydrogen, such as the oxides of Cu, Fe, Ni, Co, Zn, Ag, Cd, Hz, W, Pd, Rh or Pt. The intent of the patentees was to remove small amounts of hydrogen, making possible higher vacuums in metal vessels. Hydrogen storage was not contemplated.

Low temperature storage of hydrogen on carbons which included a transition metal, e.g. Ni, Pd, Pt, Co, Rh, Ir, Fe, Ru and Os was disclosed in U.S. Pat. No. 4,716,736. Pressures near atmospheric were preferred but higher pressures were suggested up to about 50 atmospheres (5067 kPa). The temperatures used were in the range of liquid nitrogen (77°K or -196°C).

The carbon molecular sieve has advantages over conventional carbons for hydrogen storage, particularly those similar to our carbon molecular sieves disclosed in U.S. Pat. No. 4,820,681, as will be seen in the following discussion.

### BRIEF SUMMARY OF THE INVENTION

Hydrogen is stored on a carbon molecular sieve having a capacity for said hydrogen greater than 0.0022 grams per gram of carbon and a volumetric efficiency greater than 15 v/v measured at 790 kPa and 25°C, and which is produced by carbonisation, in a substantially oxygen-free environment, of a polymer of an oxygen-free monomer. Preferably, the storage pressure is about 2,170 to 6,990 kPa (300 to 1000 psig) and the temperature is about -70° to -30°C (203° to 243°K).

In a preferred embodiment the carbon molecular sieve is derived from carbonization of a copolymer of vinylidene chloride with less than about 0.5% of a cross-linking agent, preferably divinylbenzene. In another embodiment, the polymer is substantially free of a cross-linking agent.

### BRIEF DESCRIPTION OF THE DRAWINGS

The sole figure illustrates the relation between precursor and hydrogen storage capacity for CMS of the invention and activated carbon.

### DETAILED DESCRIPTION OF THE INVENTION

### Carbon Molecular Sieves (CMS)

These materials may be thought of as analogs to the more conventional inorganic molecular sieves.

The carbon molecular sieves and activated carbons produced according to the methods of the prior art are considered inferior to the adsorbent of the present invention for the storage of hydrogen. CMS materials made by prior art methods from waste materials from the manufacture of Saran or other low cost feedstocks have not been optimized for the desired properties of the subject CMS materials.

Carbon molecular sieves (CMS) for the adsorption of hydrogen are produced by a unique method. This method comprises three steps: (1) polymerization of an oxygen-free monomer, optionally in the presence of an oxygen-free cross-linking agent; (2) forming or shaping particles of the resultant polymer into a desired shape; and then, (3) carbonizing the shaped material in a substantially oxygen-free environment.

The monomers should be readily polymerizable, essentially free of oxygen in their molecular structure and preferably consisting of hydrogen, a halogen or nitrogen, and carbon. Among the materials which may be employed as the monomer are acrylonitrile (AN), vinylidene fluoride (VDF), chlorotrifluoroethylene (HALAR), vinylidene chloride (VDC), mixtures of two or more monomers such as mixtures of vinylidene chloride and vinyl chloride, vinylidene chloride and acrylonitrile, and a mixture of styrene and divinylbenzene. Other monomers which are suitable are vinyl fluoride, vinyl bromide, chlorinated ethylene, chlorofluoroethylene, vinyl chlorobenzene, vinylidene bromide and vinylidene-fluoride-chlorotrifluoroethylene. The preferred monomer is vinylidene chloride.

The most favorable results have been obtained employing a bulk polymerization, solution polymerization or suspension polymerization. Bulk polymerization is the direct conversion of liquid monomer to polymer in a reaction system in which the polymer remains soluble in its own monomer. Solution polymerization uses a solvent capable of dissolving the monomer, the polymer, and the polymerization initiator. In suspension polymerization, the monomer is dispersed rather than dissolved in the medium, with water being a typical suspension medium. An initiator is dissolved in the monomer, the monomer is dispersed in water incorporating a dispersing agent to stabilize the suspension formed. It is believed that precipitation polymerization and vapor phase polymerization would also be suitable.

The carbon molecular sieves prepared from bulk and solution polymerized precursors are hydrophobic whereas the precursors synthesized with various emulsion and suspension formulations have produced carbon molecular sieves with some hydrophilic characteristics. It is believed that adjustment of the methods used to perform the emulsion and suspension polymerizations may result in the production of hydrophobic molecular sieves.

The polymers produced in the initial polymerization step optionally may be cross-linked with a substantially oxygen-free cross-linking agent. The cross-linking agent will typically be present during the polymerization at a concentration equal to less than 10 mole percent of the monomer preferably less than 1 mol.%, and most preferably less than 0.5 mol%. A preferred cross-linking agent is divinylbenzene. Other possible cross-linking agents include trivinyl benzene, divinyl acetylene, and divinyl sulfide.

As the production of carbon molecular sieves from polymers containing no oxygen is desired, the polymerization initiator is also preferably an oxygen-free compound. Therefore, a carbon or azo rather than an oxygen initiator is preferably used. One suitable non-oxygen containing initiator is 2,2'- azobis(isobutyronitrile), (AIBN). Another highly suitable polymerization initiator is the compound 2,2'-azobis (2,4-dimethylvaleronitrile) which is available from DuPont Chemical Company and is sold under the trade VAZO 52.

If the precursor polymer is produced by solution polymerization, a number of different solvents may be employed. Typical solvents include normal hexane, chloroform, carbon tetrachloride, orthodichlorobenzene, and 1,1,2,2-tetrachloroethane. Of these materials, orthodichlorobenzene and 1,1,2,2-tetrachloroethane are preferred. General characteristics for the selection of a solvent include a high-solubility for the monomer, the absenoe of oxygen in the molecular structure, and a large difference in boiling point between the solvent and the monomer. A weight ratio of monomer to solvent between 1:1 to 1:2 will normally be suitable.

For ease in fabricating the polymer into a desired shape, it may be pulverized, shredded, or in some way reduced in size to small free-flowing particles, and then may be shaped or formed into a desired configuration by conventional means. Suspension polymerization tends to produce spherical polymer beads which may be carbonized directly.

The polymeric material is carbonized by heating the material to a high temperature in the presence of an inert gas such as nitrogen or helium. The concentration of oxygen in the atmosphere surrounding the particles undergoing carbonization should be less than 0.1 mole percent and is preferably less than 0.05 mole percent. The carbonization will result in the evolution of a hydrogen halide or other chemical species. Preferably the inert gas should be flowing at.a sufficient rate to remove this material from the particles. However, it has been found that the removal of the hydrogen halide is not necessary to the production of suitable finished material by this method. It is preferred that prior to high temperature carbonization the polymer be heated above 150°C and held at this temperature for several hours. The shaped polymer is then preferably subjected to a programmed temperature increase to a temperature above 700°C. The temperature is preferably raised at a rate greater than 50°C per hour but less than 200°C, It is preferred to hold the final temperature for a period of at least 45 minutes and preferably for at least one hour. A preferred rate of programmed heating is 75-125°C per hour. The highest temperature is normally required for less than 5 hours. The required holding period can be determined by weight loss measurements.

Only a single carbonization step is needed. The second carbonization step of some prior art methods is not required. The second carbonization step of the prior art occurs after the product of the first carbonization has been pulverized, admixed with a binder or other material such as coal tar pitch or other heavy high carbon content material and then shaped again.

Since the sieve precursors are derived from polymeric materials they are substantially free of the inorganic materials such as metals and inorganic oxides which may be present when the precursor material is made from a naturally occurring substance such as coal, coconut shells, peat, or wood. Also those materials which contain a binder will normally have impurities derived from the binder in addition to impurities present in the precursor materials. After carbonization on a hydrogen- and oxygen-free basis, the product should contain at least 99.5 wt.% carbon and preferably at least 99.8 wt.% carbon. This measurement does not include any material applied as a surface treatment or coating.

The shaped polymeric material will shrink during the carbonization step in a proportional manner along each dimension. The amount of shrinkage is also proportional to the amount of weight loss caused by the driving off of the hydrogen halide from the shaped polymer. A shaped pellet will lose approximately 70 percent of its weight and size during the carbonization procedure due to the evolution of hydrogen chloride, hydrogen bromide, or hydrogen fluoride or a mixture of these gases. For example, with polyvinylidene chloride polymers, the final carbonized material will often equal about 27 to 28 weight percent of the initial or starting material but the density of the initial material and the final carbonized material are very similar. The density measured in terms of grams per mL of the finished carbon molecular sieves is normally dependent on the density of the initial uncarbonized polymer and the carbonization conditions.

When a precursor material is carbonized, the pores formed may not be the most desirable size and the total pore volume of a particle may be less than the maximum possible. Ideally, one would want to achieve the largest pore volume consistent with the necessary structural integrity. The pores themselves should have a size which provides the maximum adsorptive capacity. This could be a single size or a distribution of pore sizes which accommodates the maximum amount of the gas to be stored.

In sieves made from polyvinylidene chloride the pore size range is very narrow and typically will be about 4.0 to 6.0 Å (0.4 to 0.6 nm) as carbonized. The capacity for hydrogen storage may be increased if the pore size is changed. If for example one considers the pores being gradually enlarged, then it will be intuitively recognized that the capacity of each pore will be increased until some limit is reached. At some point it would be expected that so much carbon would be removed that the structural integrity of the carbon would be lost and the carbon would collapse with a consequent loss of pore volume. However, another factor must be considered. The pores are understood to be more than containers for gaseous hydrogen, they are considered to cause the molecules to be held within the pores in closer proximity than in the gas phase. It is this phenomenon which provides an advantage for the use of adsorbents such as carbon, otherwise one might as well simply use an empty container, which would have a larger capacity than when filled with carbon. This quasi-condensation of hydrogen in the pores will have its maximum effect at some pore size. One would expect that the pore size could not be increased indefinitely without losing capacity for hydrogen. If a method were available for increasing the pore size uniformly, it should be possible to identify for any given carbon the optimum pore size. However, since most carbons have non-uniform pores to some extent, it would be expected that the actual optimum for each carbon would have to be determined experimentally. In part, the optimum size may be affected by the larger meso and macro pores which are not considered to hold hydrogen as effectively as the micropores, but may assist the gas in entering or leaving those pores.

Since in many cases, it will be necessary to remove carbon to increase the size of the pores produced by the carbonization of the PVDC precursor polymer. gas phase reactions which can remove carbon are used, for example, reaction of carbon with steam, carbon dioxide, or oxygen. Each reaction produces carbon oxides, which are volatile and easily removed from the carbon. The temperature at which the reactive gas contacts the carbon will be of particular importance. Preferably the temperature will be at least 750°C. In some cases, it may be desirable to use staged temperatures where more than one contacting step is used. As with many chemical reactions the time at which the reactive gas is in contact with the carbon will have to be considered. The concentration of the reactive gas could be an important factor in determining the rate at which the carbon is removed. It may be desirable to vary the concentration during the process or it may be preferred to carry out the activation process in a series of steps so that the process can be more readily controlled.

The pore size may be decreased by known processes such as those which deposit carbon in the pores by exposure to hydrocarbons at high temperatures. Alternatively, the pore size could be changed by selection of the monomers used in preparing the carbon molecular sieves.

### Hydrogen Storage

Hydrogen will be stored in the pores of the carbon and in spaces around the carbon particles. The optimum pore size for hydrogen adsorption is believed to be between 3.0 and 10.0 Å (0.3 to 1.0 nm) since the pores do not just hold compressed gas, but cause the gas molecules to behave as if more highly compressed, that is, to have a higher density than the gas normally has at the storage pressure. Thus, it follows that the volume of such micropores in a carbon particle should be as large as possible to maximize gas storage. Gas in the void spaces around the carbon would be expected to have its normal density and therefore, these spaces should be minimized. Thus, the carbon should have the highest possible packing density. Another factor to be considered is the need to provide for access to the carbon so that the hydrogen can be effidently stored and recovered. For that purpose larger pores are believed to be needed, say about 20 to 500 Å (2 to 50 nm). These have been termed meso pores. Larger pores, i.e. above 500 Å (50 nm) are considered macro pores. In a vessel packed with carbon molecular sieve particles, hydrogen can be stored in the micropores, the meso and macro pores, and in the void space around the carbon particles.

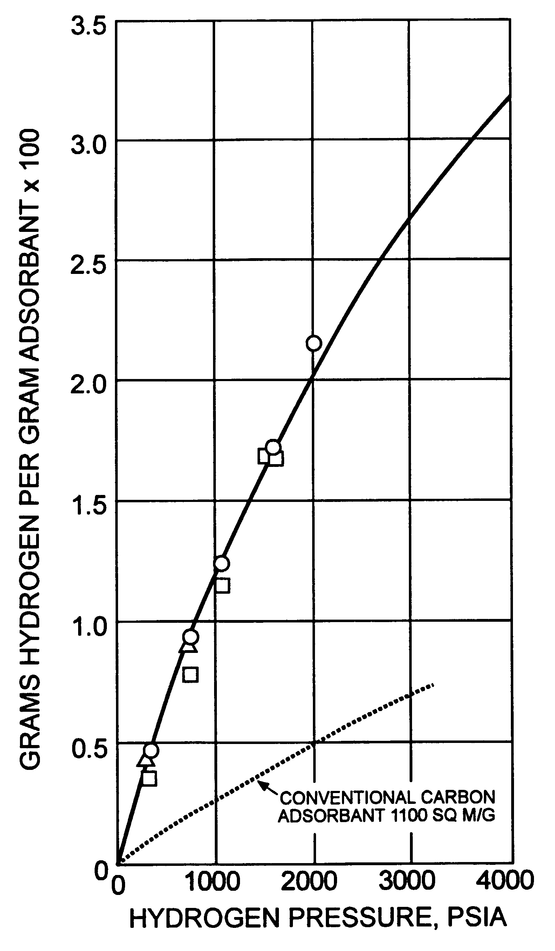

Hydrogen may be adsorbed on carbon molecular sieves in amounts which increase with pressure until at about 3,000 psig (20,684 kPa gauge), the hydrogen density is one-fourth of that of liquid hydrogen at cryogenic temperatures. The amount of hydrogen adsorbed is shown in Figure 1 which compares the capacity of carbon molecular sieves of the invention with the capacity of a conventional activated carbon adsorbent. It should be noted that each form of carbon had about the same surface area, 1,100 m²/gm, so that the enhanced capacity for the carbon molecular sieve cannot be attributed to the surface area. The increased capacity is attributed to the uniform pore size and shape of the carbon molecular sieves of the invention. It will be seen that at 3,000 psia (20,684 kPa absolute) the activated carbon had a capacity of about 0.007 gm/gm of carbon while the carbon molecular sieve had a capacity of about 0.027 gm/gm.

It has also been found that the carbon molecular sieves of the invention have a greater capacity than commercially available carbon molecular sieves as will be shown in the following examples.

### Example 1

This example illustrates the production of CMS pellets beginning with the bulk polymerization of a cross-linked polyvinylidene chloride. The monomers were purified by contact with activated carbon (Calgon PCB, 20 X 50 mesh) at the ratio of 2 grams activated carbon per 100 mL of the monomer and the divinyl benzene to remove any polymerization inhibitors. 0.1 gram of AIBN solids were introduced into a 125 mL Teflon-lined Parr bomb. 82.4 mL of vinylidene chloride monomer and 1 mL divinylbenzene were transferred into the reactor and the reactor was sealed and shaken. The reactor was then kept in an oven at 70°C for at least 8 hours. Then, the polymer products were collected and weighed. The yield of polymerization reaction product was determined after the polymer was evacuated until a constant weight was obtained.

The polymer was then pulverized with an electric blender and pellets were made with a handpress.

The pellets were carbonized in a rotating reactor with a programmed heating rate. The pellet to be carbonized was heated in a one-inch diameter quartz tube placed in a tube furnace. A steady stream of inert gas was introduced into the quartz tube for at least 30 minutes prior to the heating of the furnace. The temperature of the furnace was increased at 110°C per hour to the final temperature of 900°C and then held for one and one-half hours before the product was allowed to cool to room temperature. It is believed important that a dry inert gas such as nitrogen or helium flows through the furnace during carbonization or if a static atmosphere is used that it should be essentially free of oxygen. The amount of cross-linking material present was 0.9 and 0.5 weight percent in various tests. The finished carbon molecular sieves produced at these two levels were quite similar.

### Example 2

This example illustrates the preparation of the polymer using solution polymerization. A 125 mL Parr bomb as described in the previous example was filled to about 85 mL. The ratio of vinylidene chloride to solvent (orthodichlorobenzene) was maintained at 1:1.5. Divinyl benzene was included at 0.5 wt.% relative to the vinylidene chloride. The reactor was held at 70°C for 21 hours. A polymer yield of 50.9 weight percent was obtained, with the solvent being removed from the polymer products by a vacuum (10⁻³ mm mercury or 1.33 x 10⁻⁴ kPa absolute) until a constant weight was obtained. The material was then pulverized, shaped and carbonized as described in Example 1. Other polymerizations with n-hexane, chloroform and carbon tetrachloride yielded 7.2, 14.2 and 19.6 wt.% yields respectively.

A second solution polymerization was performed using 1,1,2,2-tetrachloroethane at a ratio of vinylidene chloride to solvent of 1:2. Divinyl benzene again was 0.5 wt.% relative to vinylidene chloride. The reaction was continued for 16 hours at a temperature of 70°C. The polymer yield was approximately 47.9 weight percent. The same general procedure used in the Example 1 for the purification of the monomer and cross-linking agent were followed for the solution polymerization trials.

### Example 3

Polymeric materials were produced using emulsion polymerization techniques. 43.7 grams of vinylidene chloride was admixed with 0.9 g of divinylbenzene cross-linking agent. Both of these materials had been purified as previously described. This admixture was added to 137.8 g of a mixture containing 1.35 g of ammonium sulfate, 0.67 g of hydrazine sulfate, 0.81 g of sodium hydroxide and 135 g of distilled water which formed the continuous phase during the polymerization. 0.45 g of sodium lauryl sulfate was added to aid in formation of the emulsion. This admixture was maintained in a rapidly agitated 500 mL reactor maintained at a temperature of 25°C for 24 hours. The polymeric material was pulverized, pressed into pellets and carbonized in accordance with procedure described for Example 1.

### Example 4

Polymeric precursors for carbon molecular sieves were made by suspension polymerization using only vinylidene chloride (VDC). 140.6 g of commercial grade VDC (PPG Industries) was passed through 40 mL of PCB activated carbon (Calgon) to remove the inhibitor content Then 0.141 g of AIBN was dissolved in the VDC. The VDC was then slowly added to 703.03 g of an aqueous solution containing 0.6% hydroxypropyl methyl cellulose and agitation of a 1000 mL Parr reactor was begun at 10-100 rpm. The vessel containing the mixture was held in a constant temperature bath at 70°C for about 8 hours, to complete the polymerization of VDC. The polymer was produced as beads of about 2 mm diameter. These were recovered, washed with water, and dried at 100° C. The VDC polymer was ground to about 10 µm and then pressed into pellets of about 3.2 mm diameter and 3.2 mm height. The pellets were placed in a quartz tube in a tube furnace and heated with a programmed schedule. A steady stream of inert gas (e.g. nitrogen or helium) was introduced for at least 30 minutes before heating began. Then, the temperature was increased from 25 to 175°C in 30 minutes to 2 hours and held for 2-4 hours. It was then raised at a rate of 100°C per hour to 700°C and held for 2 hours before the product was allowed to cool to room temperature.

The carbon molecular sieve was then activated in a stream of CO₂ at 800° C for a period of 15 minutes and a stream of He containing H₂O vapor at a bath temperature of 75°C for a period of 1 hour and 30 minutes. The resulting carbon had a carbon loss of 15 wt.%.

### Example 5

Hydrogen was stored on a carbon molecular sieve prepared as in Example 1. The surface area was 1,450 m²/gm and the porosity was 0.45 mL/gm. The carbon was in the form of pellets 22 mm diameter and 6 mm thick. It was placed into a 46.5 mL cell which was then evacuated to 1.33 x 10⁻⁴ kPa. Then, hydrogen was admitted from a cylinder and the pressure gradually increased. The amount of hydrogen adsorbed at ambient temperature (25°C) was measured by weighing on an analytical balance. The results are shown graphically in the Figure.

### Example 6

The hydrogen storage capacity of an activated carbon molecular sieve prepared as in Example 4 was tested along with an activated carbon PCB (Calgon) and a superactivated carbon AX-21 (Anderson Development Co.) at 600 psig (4,137 kPa gauge) and room temperature. Results of the measurements are summarized in Table 1, along with the comparable results from Example 5. The carbon molecular sieve shows the highest volumetric efficiency comparing with those of others measured under the similar condition.

**Table 1:**

| H₂ Storage Capacty at 4,137 kPa and 25°C | | | | | | |
|---|---|---|---|---|---|---|
| Adsorbent | Packing density (g/mL) | N₂-BET Surface area (m2/g) | Cell Volume (mL) | H₂ Stored (g) | Specfic Capacity (g/g) | Volumetric Efficiency (v/v)* |
| Example 1 | 0.691 | 1,450 | 46.5 | 0.28 | 0.0087 | 73.6 |
| Example 4 | 0.545 | 1,350 | 40.2 | 0.19 | 0.0086 | 57.2 |
| PCB | 0.487 | 1,270 | 46.5 | 0.15 | 0.0066 | 39.4 |
| AX-21 | 0.339 | 2,500 | 40.2 | 0.17 | 0.0128 | 52.9 |

| | | | | | | |
|---|---|---|---|---|---|---|
| * Volume of H₂ at 300 K and 101.3 kPa with a density of 0.00008185 g/mL. | | | | | | |

### Example 7

The hydrogen storage capacity of a carbon molecular sieve prepared as in Example 1 was measured at a refrigeration temperature of 243 K (-30°C) and 600 psig (4,187 kPa gauge). Results of the measurement are compared with other carbon adsorbents measured at cryogenic and refrigeration temperatures reported in the literature as shown in Table 2.

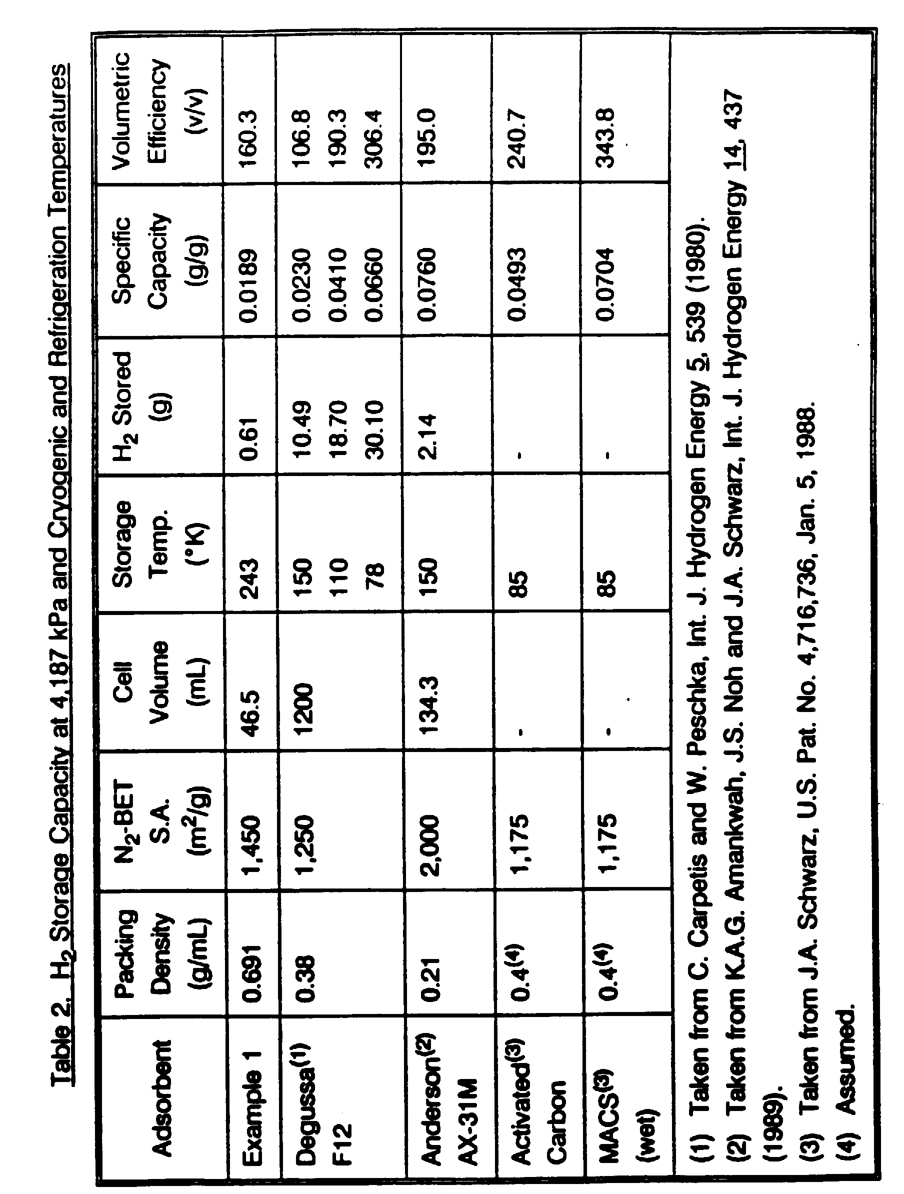

It can be seen that the volumetric efficiency of the adsorbent of the invention compares favorably with those reported in the literature. More importantly, none of the carbons reported were tested at relatively high temperatures. The results reported for Degussa F12 show that the volumetric efficiency increases as the temperature is decreased. However, use of very low temperatures involves substantially increased costs for refrigeration. Thus the ability of the adsorbent of the invention to obtain high volumetric efficiency at temperatures nearer to ambient is a distinct advantage.

### Example 8

The hydrogen storage capacity of a carbon molecular sieve prepared as in Example 4 was measured at 25°C (298°K) and 100 psig (790 kPa gauge). The results are compared with another carbon adsorbent in the following Table 3.

**Table 3**

| Absorbent | Packing Density (g/mL) | N₂-BET Surface Area (m²/g) | Cell Volume (mL) | H₂ Stored (g) | Specific Capacity (g/g) | Volumetric Efficiency (v/v) |
|---|---|---|---|---|---|---|
| Example 4 | 0.545 | 1,350 | 40.2 | 0.049 | 0.0022 | 15 |
| AX-21 | 0.339 | 2,500 | 40.2 | 0.033 | 0.0024 | 10 |

The AX-21 carbon has been considered by others to be a good adsorbent for hydrogen. It can be seen that a carbon molecular sieve of the invention is significantly better with respect to volumetric efficiency. It is this characteristic which is most important in practical applications rather than the specific capacity. A high volumetric efficiency provides the largest delivered volume of hydrogen from a given size container.

## Claims

1. A process for the storage of hydrogen comprising adsorbing gaseous hydrogen on a carbon molecular sieve having a capacity for said hydrogen greater than 0.0022 grams per gram of carbon and a volumetric efficiency greater than 15 v/v measured at 790 kPa and 25°C, and produced by carbonization, in a substantially oxygen-free environment, of a polymer of an oxygen-free monomer.

2. The process of claim 1, wherein said process is carried out at a pressure of about 2,170 to 6,990 kPa.

3. The process of claim 1 or claim 2, wherein said process is carried out at a temperature of about -70° to -30°C.

4. The process of any preceding claim, wherein said carbon molecular sieve has a carbon content greater than 99.5 wt.%.

5. The process of any preceding claim, wherein said polymer is a vinylidene chloride polymer and contains less than 0.5 mol. % of an oxygen-free cross-linking agent.

6. The process of claim 5, wherein said cross-linking agent is divinylbenzene.

7. The process of any preceding claim, wherein said polymer is substantially free of cross-linking agent.

8. The process of any preceding claim, wherein said carbon molecular sieve has micropores with an average size of about 4.0-6.0 Å (0.4-0.6 nm).

9. Use of a sieve as defined in any preceding claim, for the storage of hydrogen by adsorption thereon.

10. A sieve as defined in any of claims 1 to 8, which has hydrogen adsorbed thereon.

## Patentansprüche

1. Verfahren zur Speicherung von Wasserstoff, bei dem man gasförmigen Wasserstoff an einem durch Carbonisation eines Polymers aus einem sauerstofffreien Monomer in im wesentlichen sauerstoffreier Umgebung hergestellten Kohlenstoffmolekularsieb mit einer Wasserstoff-Kapazität über 0,0022 Gramm pro Gramm Kohlenstoff und einen volumetrischen Wirkungsgrad über 15 v/v, gemessen bei 790 kPa und 25°C, absorbiert.

2. Verfahren nach Anspruch 1, das bei einem Druck von etwa 2.170 bis 6.990 kPa durchgeführt wird.

3. Verfahren nach Anspruch 1 oder 2, das bei einer Temperatur von etwa -70°C bis -30°C durchgeführt wird.

4. Verfahren nach einem der vorhergehenden Ansprüche, bei dem das Kohlenstoffmolekularsieb einen Kohlenstoffgehalt über 99,5 Gew.-% aufweist.

5. Verfahren nach einem der vorhergehenden Ansprüche, bei dem es sich bei dem Polymer um ein Vinylidenchloridpolymer handelt, das weniger als 0,5 Mol-% eines sauerstofffreien Vernetzers enthält.

6. Verfahren nach Anspruch 5, bei dem es sich bei dem Vernetzer um Divinylbenzol handelt.

7. Verfahren nach einem der vorhergehenden Ansprüche, bei dem das Polymer im wesentlichen vernetzerfrei ist.

8. Verfahren nach einem der vorhergehenden Ansprüche, bei dem das Kohlenstoffmolekularsieb Mikroporen mit einer durchschnittlichen Größe von etwa 4,0 bis 6,0 Å (0,4-0,6 nm) aufweist.

9. Verwendung eines Siebs nach einem der vorhergehenden Ansprüche zur Speicherung von Wasserstoff durch Adsorption.

10. Sieb nach einem der Ansprüche 1 bis 8 mit daran adsorbiertem Wasserstoff.

## Revendications

1. Procédé de stockage d'hydrogène comprenant l'adsorption d'hydrogène gazeux sur un tamis moléculaire au carbone ayant une capacité pour ledit hydrogène supérieure à 0,0022 gramme par gramme de carbone et une efficacité volumétrique supérieure à 15 v/v mesurée à 790 kPa et 25°C, et produit par carbonisation, dans un milieu essentiellement exempt d'oxygène, d'un polymère d'un monomère exempt d'oxygène.

2. Procédé selon la revendication 1, ledit procédé étant réalisé à une pression d'environ 2 170 à 6 990 kPa.

3. Procédé selon la revendication 1 ou la revendication 2, ledit procédé étant réalisé à une température d'environ -70° à -30°C.

4. Procédé selon l'une quelconque des revendications précédentes, dans lequel ledit tamis moléculaire au carbone a une teneur en carbone supérieure à 99,5% en poids.

5. Procédé selon l'une quelconque des revendications précédentes, dans lequel ledit polymère est un polymère de chlorure de vinylidène et contient moins de 0,5% en mole d'un agent réticulant exempt d'oxygène.

6. Procédé selon la revendication 5, dans lequel ledit agent réticulant est le divinylbenzène.

7. Procédé selon l'une quelconque des revendications précédentes, dans lequel ledit polymère est essentiellement exempt d'agent réticulant.

8. Procédé selon l'une quelconque des revendications précédentes, dans lequel ledit tamis moléculaire au carbone a des micropores ayant une taille moyenne d'environ 4,0-6,0 Å (0,4-0,6 nm).

9. Utilisation d'un tamis comme défini dans l'une quelconque des revendications précédentes, pour le stockage d'hydrogène par adsorption sur celui-ci.

10. Tamis comme défini selon l'une quelconque des revendications 1 à 8, ayant de l'hydrogène adsorbé dessus.
